# EUROPEAN PATENT APPLICATION

(11) **EP 4 830 902 A2**
(43) Date of publication of application: **28.10.2026**
(21) Application number: 26197143.6
(22) Date of filing: 06.08.2026
(51) Int. Cl.: B29C 64/259, B29C 64/124, B29C 64/245, B29C 64/371, B33Y 30/00, B33Y 40/00

(54) **CURING SYSTEM, PRINTER AND SECOND CURING CONTAINER**

(30) Priority: 24.11.2025 CN 202511740356
(71) Applicant: Shining 3D Tech Co., Ltd., Hangzhou, Zhejiang 311258 (CN)
(72) Inventor: LI, Pingao, Hangzhou, 311258 (CN); ZHAO, Xiaobo, Hangzhou, 311258 (CN); HE, Junlin, Hangzhou, 311258 (CN); CHEN, Da, Hangzhou, 311258 (CN)
(74) Representative: Dai, Simin

(57) **Abstract**

The present disclosure provides a curing system, a printer, and a second curing container. The curing system includes: a first curing container (200), including a housing (210) having a first opening (211) and a door (260) configured to open and close the first opening, where the first curing container is provided therein with a curing light source and a heating element (220); a second curing container (100), capable of being placed into and taken out from the first curing container through the first opening, where the second curing container includes a cavity (131) configured to receive a printed object (400), a gas inlet (111) and a gas outlet (121) that are in communication with the cavity; and where at least a portion of the second curing container facing the curing light source is configured to be light-transmissive.

## Description

### CROSS REFERENCE TO RELATED APPLICATIONS

This application claims priority to Chinese Patent Application No. 202511740356.3 entitled "CURING SYSTEM, PRINTER AND SECOND CURING CONTAINER" filed on November 24, 2025, the entire content of which is incorporated herein by reference.

### TECHNICAL FIELD

This application relates to the field of 3D printing technologies, and in particular, to a curing system, a printer, and a second curing container.

### BACKGROUND

The additive manufacturing (e.g., three-dimensional (3D) printing) refers to a technique for manufacturing objects by solidifying portions of a build material at specific locations. The additive manufacturing technique may include stereolithography (SLA), digital light processing (DLP), selective or fused deposition modeling, direct composite manufacturing, laminated object manufacturing, selective phase zone deposition, multiphase jet solidification, ballistic particle manufacturing, particle deposition, laser sintering, or combinations thereof.

In methods or systems involving stereolithography or digital light processing in additive manufacturing, a printed object taken out from a forming platform typically cannot be directly used, and requires subsequent processes such as cleaning, secondary curing, and polishing.

In some secondary curing scenarios, the entire curing box is within the printing device and cannot be freely taken out. To adapt to a large printed object, the curing box is typically large in size, and the printed object is kept in a non-aerobic environment by, for example, filling nitrogen or carbon dioxide into the curing box or vacuuming the curing box. For some small printed objects, it is still necessary to fill the entire curing box with nitrogen or vacuumize, resulting in a long time for filling nitrogen/vacuumizing, a large amount of nitrogen and a low utilization.

### SUMMARY

In a first aspect, the embodiments of this application provide a curing system, including:
a first curing container including: a housing having a first opening, and a door configured to open and close the first opening, wherein the first curing container is provided therein with a curing light source and a heating element;
a second curing container, capable of being placed into and taken out from the first curing container through the first opening, wherein the second curing container includes: a cavity, configured to receive a printed object, and a gas inlet and a gas outlet that are in communication with the cavity; and
at least a portion of the second curing container facing the curing light source is configured to be light-transmissive.

In some embodiments, the second curing container includes: a box body having a second opening, and a cover, movably connected with the box body and configured to open and close the second opening, wherein the printed object is placed into and taken out from the cavity through the second opening, and a sealing member is provided between the box body and the cover.

In some embodiments, one side of the cover is hinged with the box body, and another side of the cover is in snap-fit connection with the box body.

In some embodiments, the gas inlet is disposed on a face of the box body different from a face where the second opening is located, and the gas outlet is disposed on a face of the cover; or the gas inlet is disposed on a face of the cover, and the gas outlet is disposed on a face of the box body different from a face where the second opening is located; or each of the gas inlet and the gas outlet is disposed on a face of the box body different from a face where the second opening is located; or each of the gas inlet and the gas outlet is disposed on a face of the cover; wherein the gas inlet is provided therein with a one-way gas inlet valve, and/or the gas outlet is provided therein with a one-way gas outlet valve.

In some embodiments, a number of the gas inlet is one or more, and a number of the gas outlet is one or more.

In some embodiments, the first opening is disposed on a first side portion of the housing, a second side portion of the housing has a third opening, the curing light source is at a bottom and/or a top of the housing, and the heating element is disposed facing the third opening.

In some embodiments, the first side portion and the second side portion are two opposite side portions of the housing, or the first side portion and the second side portion are two adjacent side portions of the housing.

In some embodiments, the curing light source includes a plurality of ultraviolet lamps, the plurality of ultraviolet lamps are evenly spaced at the bottom and/or the top of the housing, the housing includes a light-transmissive plate positioned relative to the curing light source, the heating element is between an air outlet of a fan and the third opening, and the air outlet of the fan is disposed facing the third opening.

In some embodiments, the second curing container is entirely configured to be light-transmissive.

In some embodiments, the cavity is further configured to accommodate at least one of nitrogen, carbon dioxide, or inert gas, and the at least one of nitrogen, carbon dioxide, or inert gas is introduced into the cavity through the gas inlet after the printed object is placed in the cavity, and is discharged from the gas outlet after the printed object is cured.

In some embodiments, one side of the door is hinged with the housing, and another side of the door is in snap-fit connection or magnetic connection with the housing;
or, the housing is configured as a drawer, the door is configured as a front panel of the drawer, and at least a portion of the drawer facing the curing light source is configured to be light-transmissive and slidably connected with an inner wall of the housing.

In some embodiments, the printed object has a fourth opening, and the curing system further includes:
a support platform, configured to be adapted to the cavity and having a plurality of holes on a surface of the support platform; and
one or more support columns, wherein one end of the one or more support columns is configured to be adapted to the plurality of holes, and the printed object is placed at another end of the one or more support columns through the fourth opening.

In a second aspect, the embodiments of this application provide a printer, including a printer body and the curing system provided in the first aspect, wherein the curing system is inside the printer body.

In some embodiments, the printer further includes a processor communicatively coupled with a sensor of the door, the curing light source and the heating element, respectively, wherein the processor is configured to:
acquire, by the sensor, open and closed state information of the door, in response to determining that the door enters a closed state from an open state, control the curing light source and the heating element to be turned on, and in response to determining that the door enters the open state from the closed state, control the curing light source and the heating element to be turned off.

In some embodiments, the printer further includes a processor communicatively coupled with the curing light source and the heating element, respectively, wherein the processor is configured to:
in response to receiving a heating-on instruction, control the curing light source and the heating element to be turned on; and
in response to receiving a heating-off instruction, control the curing light source and the heating element to be turned off.

In a third aspect, the embodiments of this application provide a second curing container, including: a cavity, configured to receive a printed object, and a gas inlet and a gas outlet that are in communication with the cavity; and
wherein at least a portion of the second curing container is configured to be light-transmissive.

In some embodiments, the second curing container includes: a box body having a second opening, and a cover, movably connected with the box body and configured to open and close the second opening, wherein the printed object is placed into and taken out from the cavity through the second opening, and a sealing member is provided between the box body and the cover.

In some embodiments, one side of the cover is hinged with the box body, and another side of the cover is in snap-fit connection with the box body.

In some embodiments, the gas inlet is disposed on a face of the box body different from a face where the second opening is located, and the gas outlet is disposed on a face of the cover; or the gas inlet is disposed on a face of the cover, and the gas outlet is disposed on a face of the box body different from a face where the second opening is located; or each of the gas inlet and the gas outlet is disposed on a face of the box body different from a face where the second opening is located; or each of the gas inlet and the gas outlet is disposed on a face of the cover; wherein the gas inlet is provided therein with a one-way gas inlet valve, and/or the gas outlet is provided therein with a one-way gas outlet valve.

In some embodiments, a number of the gas inlet is one or more, and a number of the gas outlet is one or more.

In some embodiments, the second curing container is entirely configured to be light-transmissive.

In some embodiments, the cavity is further configured to accommodate at least one of nitrogen, carbon dioxide, or inert gas, and the at least one of nitrogen, carbon dioxide, or inert gas is introduced into the cavity through the gas inlet after the printed object is placed in the cavity, and is discharged from the gas outlet after the printed object is cured.

In some embodiments, the printed object has a fourth opening, and the second curing container further includes:
a support platform, configured to be adapted to the cavity and having a plurality of holes on a surface of the support platform; and
one or more support columns, wherein one end of the one or more support columns is configured to be adapted to the plurality of holes, and the printed object is placed at another end of the one or more support columns through the fourth opening.

In a fourth aspect, the embodiments of this application provide a curing method, applied to the curing system provided in the first aspect, and including:
placing a printed object into the second curing container;
introducing at least one of nitrogen, carbon dioxide or inert gas into the second curing container; and
placing the second curing container into the first curing container.

In a fifth aspect, the embodiments of this application provide a printer, including: a printer body, and a first curing container, disposed at a bottom of the printer body and including: a housing, having a first opening, and a door, configured to open and close the first opening, wherein the first curing container is provided therein with a curing light source and a heating element.

### BRIEF DESCRIPTION OF DRAWINGS

The accompanying drawings, which are incorporated in and constitute a part of this specification, illustrate embodiments consistent with this application and, together with the specification, serve to explain the principles of this application.
FIG. 1 is a schematic diagram of a use state of a curing system according to an embodiment of this application.
FIG. 2 is a schematic diagram of a three-dimensional structure of a second curing container according to an embodiment of this application.
FIG. 3 is a schematic cross-sectional view of a second curing container according to an embodiment of this application.
FIG. 4 is a schematic diagram of an exploded state of a second curing container according to an embodiment of this application.
FIG. 5 is a schematic diagram of a three-dimensional structure of a first curing container according to an embodiment of this application.
FIG. 6 is a schematic diagram of an exploded state of a first curing container according to an embodiment of this application.
FIG. 7 is a schematic structural diagram of a printer according to an embodiment of this application.
FIG. 8 is a schematic structural diagram of a printed object according to an embodiment of this application.
FIG. 9 is a schematic installation diagram of a support column and a hole according to an embodiment of this application.

Specific embodiments of this application have been shown through the above drawings, which will be described in more detail below. These drawings and text descriptions are not intended to limit the scope of the concept of this application in any way, but to illustrate the concept of this application for those skilled in the art by referring to specific embodiments.

### DETAILED DESCRIPTION

First, those skilled in the art should understand that these implementations are merely used to explain the technical principles of this application, and are not intended to limit the protection scope of this application. Those skilled in the art can make adjustments as needed to adapt to specific applications.

Secondly, it should be noted that in the description of the embodiments of this application, unless otherwise expressly specified and defined, the terms "connected", "connection" and "couple" should be understood in a broad sense, for example, it may be a fixed connection, a detachable connection, or an integral connection; it may be a mechanical connection or an electrical connection; it may be a direct connection, an indirect connection through an intermediate medium, or an internal communication between two components. Those skilled in the art may understand specific meanings of the foregoing terms in embodiments of this application based on a specific situation.

The additive manufacturing (e.g., three-dimensional (3D) printing) refers to a technique for manufacturing objects by solidifying portions of a build material at specific locations. The additive manufacturing technique may include stereolithography (SLA), digital light processing (DLP), selective or fused deposition modeling, direct composite manufacturing, laminated object manufacturing, selective phase zone deposition, multiphase jet solidification, ballistic particle manufacturing, particle deposition, laser sintering, or combinations thereof.

In methods or systems involving stereolithography or digital light processing in the additive manufacturing, a printed object taken out from a forming platform typically cannot be directly used, and requires subsequent processes such as cleaning, secondary curing, and polishing. The secondary curing can help complete the polymerization of the printed object and help it achieve the best material performance.

In some secondary curing scenarios, the entire curing box is within the printing device and cannot be freely taken out. To adapt to a large printed object, the curing box is typically large in size, and the printed object is kept in a non-aerobic environment by, for example, filling nitrogen or carbon dioxide into the curing box or vacuuming the curing box. For some small printed objects, it is still necessary to fill the entire curing box with nitrogen or vacuumize, resulting in a long time for introducing nitrogen/vacuumizing, a large amount of nitrogen and a low utilization.

In recent years, digital dentistry has reduced the risk and uncertainty associated with human factors, and provided greater consistency, accuracy, and precision at each stage of the workflow to improve patient care. From models to surgical guides or clear aligners, 3D printers can produce a range of high quality intra-oral devices, such as dental devices, which also introduces problems with secondary curing of intra-oral devices manufactured using the additive manufacturing technique.

The post-processing curing box for 3D printed dental products is available in two types: a nitrogen-fillable type and a vacuum curing type. The overall design size of the vacuum curing box is large, the aesthetic effect of dental application curing is not as good as that of the nitrogen-fillable curing box, and the noise is large when vacuuming. Since the air in the nitrogen-fillable curing box is replaced with nitrogen, the occurrence of oxygen inhibition of polymerization will be reduced in a nitrogen environment. The dental application after curing will be more complete and uniform in mechanical properties, and the drying property and aesthetic effect of the model surface will also be better. However, the size of the existing post-processing nitrogen-fillable curing box for 3D printing is still large. It takes a long time to replace all the air in the curing box with nitrogen, and even for a printed object with a small size, it is necessary to replace all the air in the entire curing box with nitrogen, resulting in low working efficiency and low utilization of nitrogen.

The embodiments of this application provide a curing system and a printer, the curing system includes: a first curing container including a housing having a first opening and a door configured to open and close the first opening, where the first curing container is provided therein with a curing light source and a heating assembly; and a second curing container capable of being placed into and taken out from the first curing container through the first opening, where the second curing container includes a cavity configured to receive a printed object, and a gas inlet and a gas outlet that are in communication with the cavity; and where at least a portion of the second curing container facing the curing light source is configured to be light-transmissive.

In the curing system provided by the embodiments of this application, the second curing container that can be placed into and taken out from the first curing container is provided, the cavity for receiving the printed object is disposed inside the second curing container, and the gas inlet and the gas outlet that are in communication with the cavity and can be closed are disposed on the second curing container. In use, the second curing container can be taken out from the first curing container and connected with a gas source such as a small gas tank through the gas inlet. And at least one of nitrogen or carbon dioxide or inert gas is introduced into the cavity of the second curing container, and the original air in the cavity is discharged from the gas outlet, thereby achieving the gas replacement in the second curing container. Then, the gas inlet and the gas outlet are closed, the second curing container filled with at least one of nitrogen or carbon dioxide or inert gas is placed into the first curing container, and the curing operation is performed using the curing light source and the heating assembly. In the curing system provided by the embodiments of this application, the volume of the second curing container is smaller than that of the first curing container, and the second curing container can also be sized to adapt to the volume of the printed object, for example, providing a plurality of second curing containers with different sizes. During curing, only at least one of nitrogen or carbon dioxide or inert gas needs to be introduced into the second curing container. Compared with introducing nitrogen into the first curing container in the related art, the curing system can effectively shorten the inflation time, improve the working efficiency, and improve the utilization of the introduced gas.

For example, some printed objects which do not need to be cured in a nitrogen, carbon dioxide, or inert gas environment may be placed in the first curing container provided in the embodiments of this application, and do not need to be placed in the second curing container.

To make the foregoing objectives, features, and advantages of the embodiments of this application more comprehensible, the following clearly and completely describes the technical solutions in the embodiments of this application with reference to the accompanying drawings in the embodiments of this application. Obviously, the described embodiments are only a part of the embodiments of this application, rather than all the embodiments. All other embodiments obtained by those skilled in the art based on the embodiments of this application without creative efforts shall fall within the protection scope of this application.

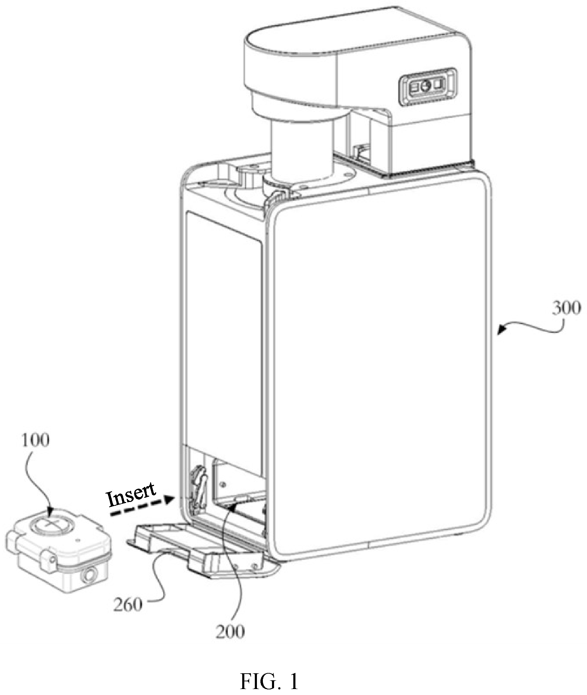

Referring to FIG. 1 to FIG. 9, an embodiment of this application provides a curing system, including: a first curing container 200, where a first curing container 200 includes a housing 210 having a first opening 211 and a door 260 configured to open and close the first opening, and the first curing container 200 is provided therein with a curing light source 240 and a heating assembly; a second curing container 100, where the second curing container 100 can be placed into and taken out from the first curing container 200 through the first opening, the second curing container 100 includes a cavity 131 configured to receive a printed object, and the second curing container 100 includes a gas inlet 111 and a gas outlet 121 that are in communication with the cavity; and at least a portion of the second curing container 100 facing the curing light source 240 is configured to be light-transmissive.

When the curing system provided by this application is in use, the second curing container 100 can be taken out from the first curing container 200, connected with a small gas tank through the gas inlet 111, and at least one of nitrogen or carbon dioxide or inert gas is introduced into the cavity of the second curing container 100, and the original air in the cavity is discharged from the gas outlet 121 to realize the gas replacement in the second curing container 100. After the gas replacement is completed, the gas inlet 111 and the gas outlet 121 of the second curing container 100 are closed, the second curing container 100 is placed into the first curing container 200, and the curing operation is performed using the curing light source 240 and the heating assembly. In the curing system provided by this application, the second curing container 100 can be sized to adapt to the volume of the printed object. During curing, it is only necessary to introduce at least one of nitrogen or carbon dioxide or inert gas into the second curing container 100. Compared with introducing at least one of nitrogen or carbon dioxide or inert gas into the first curing container 200 in the related art, the curing system can effectively shorten the inflation time, improve the working efficiency, and improve the utilization of the introduced gas. For example, when preparing the dental prosthesis, the second curing container 100 matching the size of the dental prosthesis may be used, and the second curing container 100 may be filled with at least one of nitrogen, carbon dioxide or inert gas only for a few seconds to a dozen seconds. If the solution of introducing gas into the first curing container 200 is adopted, more time is required. The solution of this application can shorten the inflation time, improve the working efficiency, and improve the utilization of the introduced gas, carbon dioxide or inert gas. It can be understood that the curing system provided by this application can also be applied to the curing of other printed objects, which is not limited in this application.

In some examples, the bottom of the second curing container 100 (a portion opposite to the cover 120) faces the curing light source 240 in actual use, and thus part or all of the bottom is configured to be light-transmissive, so that the light of the curing light source 240 can impinge on the printed object. It should be noted that, in actual use, other portions of the second curing container 100, such as the side portion or the cover 120, may also face the curing light source 240, so these portions may also be configured to be partially transparent, which is not limited in this application.

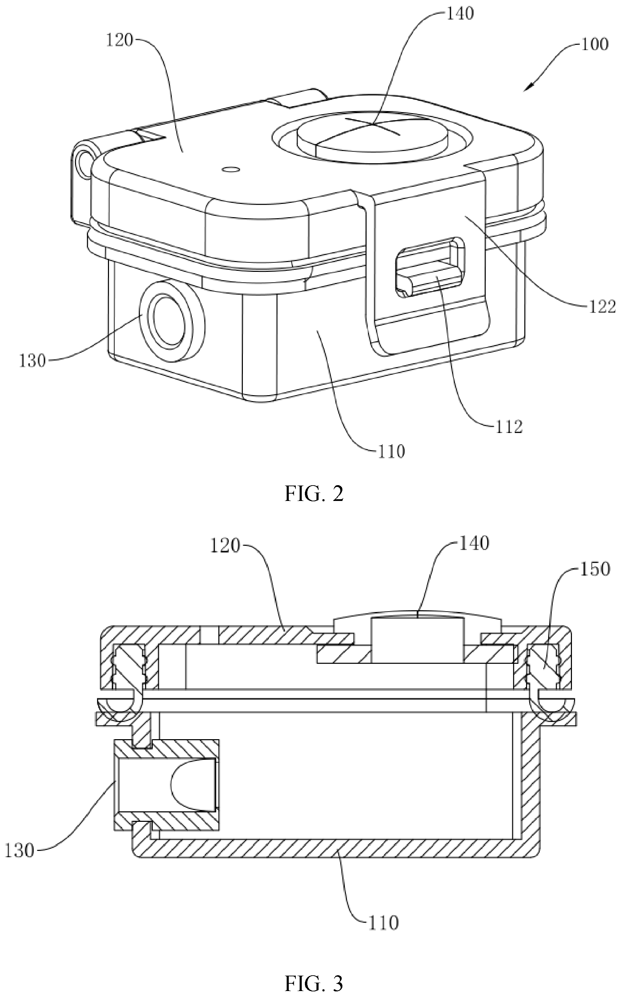

In some embodiments of this application, referring to FIG. 2 to FIG. 4, the second curing container 100 includes a box body 110 having a second opening 212 and a cover 120 that is movably connected with the box body 110 and that is configured to open and close the second opening. The printed object is placed into and taken out from the cavity through the second opening, and a sealing member 150 is disposed between the box body 110 and the cover 120.

Before curing, the cover 120 is opened, the printed object is placed into the box body 110, then the cover 120 is closed, after curing is completed, the cover 120 is opened, and the cured printed object is taken out. By providing the sealing member 150, the gap between the box body 110 and the cover 120 can be sealed to prevent oxygen from entering the second curing container 100 through the gap, thereby avoiding the occurrence of oxygen inhibition of polymerization that would otherwise affect the mechanical properties and aesthetic effects of the printed object. In this embodiment, the sealing member 150 is a sealing ring, and in other embodiments of this application, the sealing member 150 may alternatively use another sealing structure, which is not limited in this application.

In some embodiments of this application, referring to FIG. 2 to FIG. 4, one side of the cover 120 is hinged with the box body 110, and another side of the cover 120 is in snap-fit connection with the box body 110.

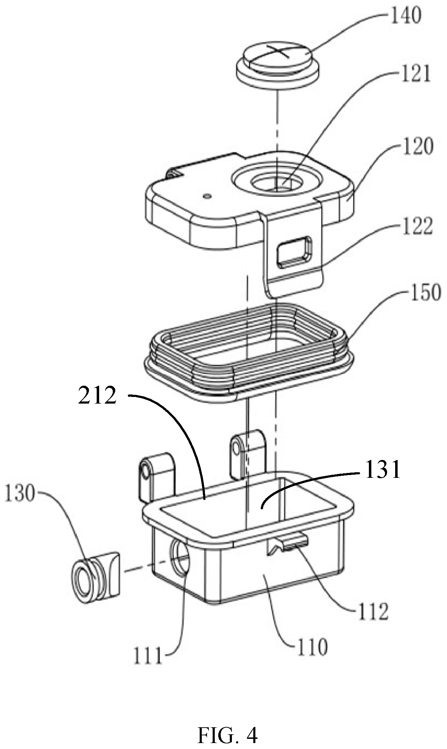

In an embodiment, referring to FIG. 2 and FIG. 4, the cover 120 is provided with a female connector 122, and the box body 110 is provided with a male connector 112. When the cover 120 is closed, the female connector 122 is clamped with the male connector 112.

In some other embodiments of this application, the cover 120 and the box body 110 may alternatively be of a split structure, and are connected only by using connectors. For example, a plurality of female connectors 122 are disposed around or on two sides of the cover 120, and a plurality of male connectors 112 are disposed at corresponding positions of the box body 110. The cover 120 and the box body 110 are connected with each other through the plurality of female connectors 122 and the plurality of male connectors 112.

In some embodiments of this application, referring to FIG. 2 to FIG. 4, the gas inlet 111 is disposed on a face of the box body 110 different from a face where the second opening is located, and the gas outlet 121 is disposed on a face of the cover 120. For example, the gas inlet 111 can be disposed on the side face and bottom face of the box body 110, and the gas outlet 121 is disposed on the cover 120.

In some other embodiments of this application, the gas inlet 111 is disposed on the cover 120, and the gas outlet 121 is disposed on a face of the box body 110 different from a face where the second opening is located, that is, a side face and a bottom face of the box body 110.

In some other embodiments of this application, each of the gas inlet 111 and the gas outlet 121 is disposed on a face of the box body 110 different from a face where the second opening is located, that is, the gas inlet 111 and the gas outlet 121 are respectively disposed on a side face and a bottom face of the box body 110. It may be understood that the gas inlet 111 and the gas outlet 121 may also be disposed on the cover 120.

In some embodiments of this application, the gas inlet 111 is provided therein with a one-way gas inlet valve 130, and the gas outlet 121 is provided therein with a one-way gas outlet valve 140. The one-way gas inlet valve 130 only allows one-way gas inflow, and the one-way gas outlet valve 140 only allows one-way gas outflow, thereby achieving automatic sealing of the second curing container 100.

For example, referring to FIG. 4, in an embodiment of this application, an end of the one-way gas inlet valve 130 located on an outside of the box body 110 is cylindrical, and is configured to connect with a gas source such as a small gas tank. An end of the one-way gas inlet valve 130 located on an inside of the box body 110 is of a flat structure, and is formed by two sheet-like rubber members abutting against each other. After the one-way gas inlet valve 130 is connected with the small gas tank, the gas can push apart the two sheet-like rubber members and thus enter the inside of the box body 110, but the gas cannot push apart the two sheet-like rubber members from another side, thereby realizing one-way gas inflow.

Referring to FIG. 4, in an embodiment of this application, the one-way gas outlet valve 140 is made of a circular rubber member, and the rubber member is provided with a cross-shaped opening. When gas is introduced into the box body 110, the gas flow opens the cross-shaped opening, and when the introducing of gas into the box body 110 stops, the rubber member closes the cross-shaped opening under its own elastic action, so as to achieve sealing and prevent external air from entering the box body 110.

In some other embodiments of this application, other structures may also be used for the one-way gas inlet valve 130 and the one-way gas outlet valve 140, as long as sealing can be implemented, which is not limited in this application.

In some embodiments of this application, a number of the gas inlet 111 is one or more, and a number of the gas outlet 121 is one or more.

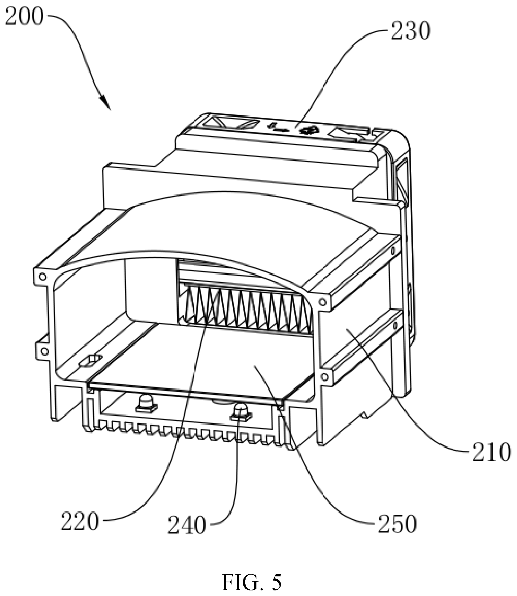

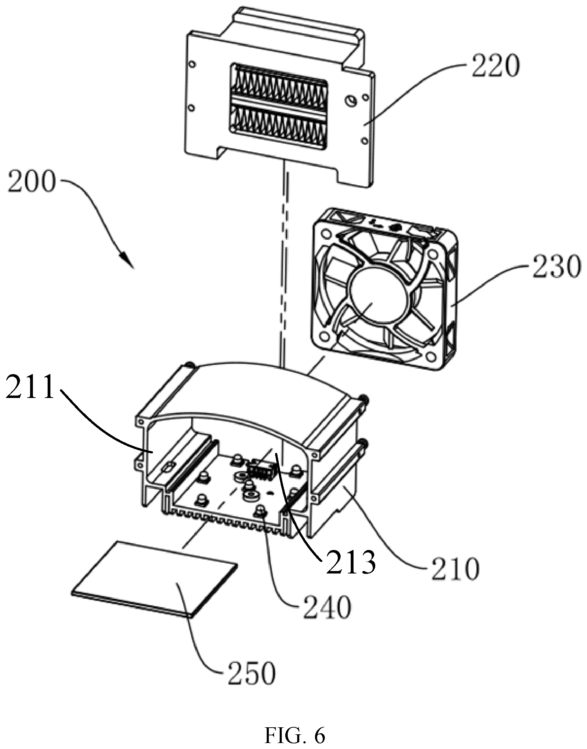

In some embodiments of this application, referring to FIG. 5 and FIG. 6, the first opening is disposed on a first side portion of the housing 210, a second side portion of the housing 210 has a third opening 213, the curing light source 240 is located at the bottom and/or the top of the housing 210, and the heating assembly is disposed facing the third opening.

In some embodiments of this application, the first side portion and the second side portion are two opposite side portions of the housing 210.

In some other embodiments of this application, the first side portion and the second side portion are two adjacent side portions of the housing 210, for example, the second side portion is located at a left side of the first side portion, or the second side portion is located at a right side of the first side portion.

In some embodiments of this application, referring to FIG. 5 and FIG. 6, the curing light source 240 includes a plurality of ultraviolet lamps, and the plurality of ultraviolet lamps are evenly spaced at a bottom and/or a top of the housing 210. The housing 210 includes a light-transmissive plate 250 positioned relative to the curing light source 240. For example, the housing 210 includes a light-transmissive plate 250 disposed in a light emission direction of the curing light source 240. The heating assembly includes a fan 230 and a heating element 220, an air outlet of the fan 230 is disposed facing the third opening, and the heating element 220 is between the air outlet of the fan 230 and the third opening. In some embodiments, the heating element 220 may be a metal resistance wire, which is not limited in this application. For example, the heating element 220 may be a metal resistance wire made of an iron-chromium-aluminum alloy or a nickel-chromium alloy, which can convert electrical energy into thermal energy by the heating effect of an electric current.

The light-transmissive plate 250 is configured to support the second curing container 100. The ultraviolet light emitted by the ultraviolet lamps can pass through the light-transmissive plate 250 and the second curing container 100 to activate the photoinitiator in the photosensitive resin, so that the photosensitive resin is cross-linked and cured from a liquid state to a solid state, thereby curing the printed object. In some embodiments, the ultraviolet lamps are uniformly disposed on the inside bottom wall and/or the inside top wall of the housing 210, and can uniformly irradiate the printed object. It may be understood that the curing light source 240 may alternatively be an ultraviolet laser with a wavelength of 355 nm, an ultraviolet LED lamp with a wavelength of 405 nm, a mercury lamp, an ultraviolet LED backlight, or other light sources having wavelengths different from those described above, which is not limited in this application.

In some embodiments, the light-transmissive plate 250 may be made of glass, which is not limited in this application. In some embodiments, parts of the housing 210 other than the light-transmissive plate 250 may be made of a light-transmissive material coated with a reflective material, or an opaque material. For example, the parts of the housing 210 other than the light-transmissive plate 250 may be made of plastic with a reflective film attached thereon, or may be made of metal, which is not limited in this application.

The heating element 220 can heat the inside of the first curing container 200 to accelerate the curing of the printed object, and the fan 230 can accelerate the circulation of air in the first curing container 200 to keep the temperature of each part in the first curing container 200 consistent, so that the curing degree of each part of the printed object is the same.

In some embodiments of this application, the second curing container 100 is entirely configured to be light-transmissive. By setting the entire second curing container 100 to be light-transmissive, it is ensured that the curing light source 240 can pass through the second curing container 100 to cure the printed object placed therein.

In some embodiments of this application, the cavity is further configured to accommodate at least one of nitrogen, carbon dioxide, or inert gas, and the at least one of nitrogen, carbon dioxide, or inert gas is introduced into the cavity through the gas inlet 111 after the printed object is placed in the cavity, and discharged from the gas outlet 121 after the printed object is cured.

By introducing the cavity with at least one of nitrogen, carbon dioxide or inert gas, the oxygen in the cavity is replaced with the at least one of nitrogen, carbon dioxide or inert gas, thereby reducing the occurrence of oxygen inhibition of polymerization. For the dental prosthesis printed object, the cured dental prosthesis is more complete and uniform in mechanical properties, and the drying property and aesthetic effect of the model surface will also be better.

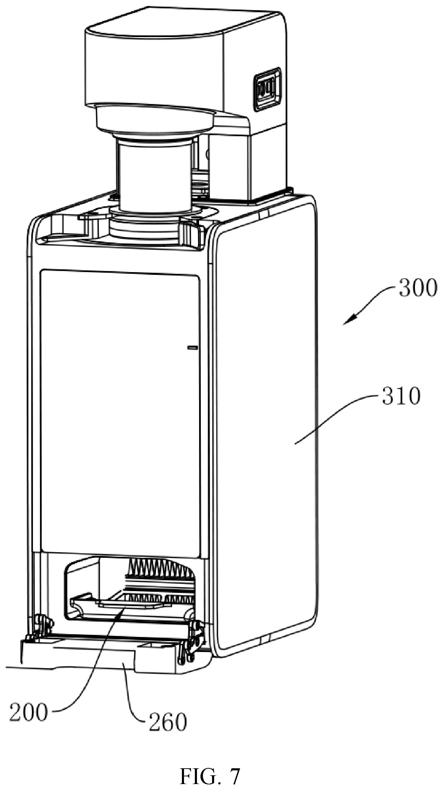

In some embodiments of this application, referring to FIG. 1 and FIG. 7, one side of the door 260 is hinged with the housing 210, and another side of the door 260 is in snap-fit connection or magnetic connection with the housing 210. In this embodiment, the lower side of the door 260 is hinged with the housing 210, and the door 260 is flush with the bottom of the housing 210 after being opened. In some embodiments, the door 260 is hingedly connected to the housing 210 at one of a left side, a right side, or an upper side thereof, which is not limited in this application.

In some other embodiments of this application, the housing 210 is configured as a drawer, the door 260 is configured as a front panel of the drawer, and at least a portion of the drawer facing the curing light source 240 is made of a light-transmissive material. During use, the door 260 is pulled to withdraw the drawer, the second curing container 100 is placed in the drawer, and then the drawer is pushed in, so that the second curing container 100 is more convenient to take and place.

It can be understood that when the second curing container 100 is designed as a drawer, the door 260 may be a front panel of the drawer, and the front panel may include, for example, a handle or a slot adapted for pulling and pushing. The drawer may be pulled out from or pushed into a printer body through the front panel, in which case the opening of the drawer body facing upward is the first opening described herein. When the drawer is pulled out from the printer body 310, the first opening is exposed to the environment, the second curing container 100 can be placed in the drawer, and when the drawer is pushed into the printer body 310, the first opening is closed.

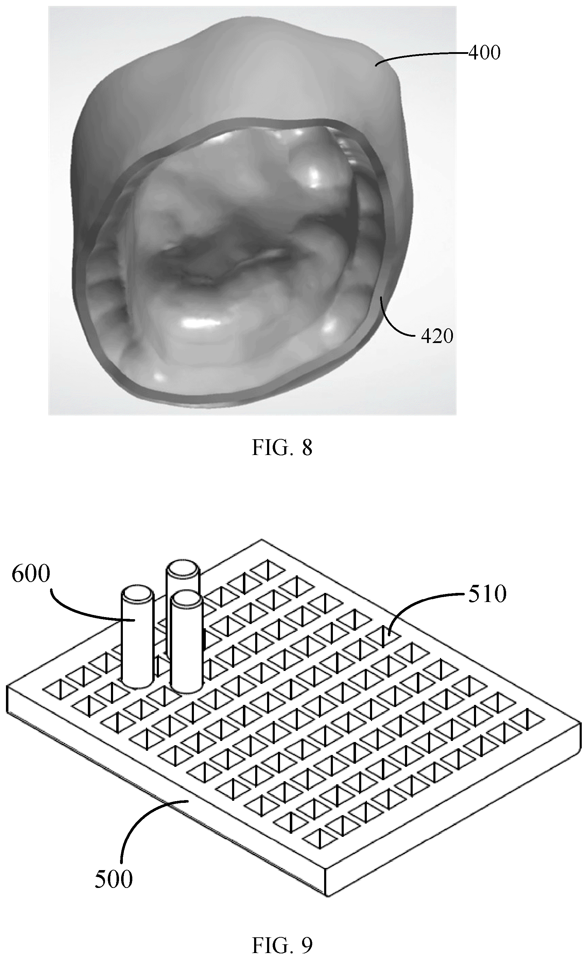

Referring to FIG. 8 and FIG. 9, in some other embodiments of this application, the printed object 400 has a fourth opening 420, and the curing system further includes:
a support platform 500, configured to be adapted to the cavity and having a plurality of holes 510 on a surface of the support platform;
one or more support columns 600, where one end of the one or more support columns is configured to be adapted to the plurality of holes, and the printed object is placed at another end of the one or more support columns through the fourth opening.

An embodiment of this application provides a printer 300, including a printer body 310 and the curing system provided in the first aspect, where the curing system is disposed inside the printer body 310.

Because the printer 300 provided in this embodiment includes the curing system described in any one of the foregoing embodiments, the printer 300 includes a structure of the curing system and beneficial effects brought by the curing system, and details are not described herein again in this embodiment. Moreover, in this application, by integrating the curing system in the printer body 310, the printer 300 can complete two steps of printing and curing. For some printed objects that do not require secondary curing in a non-oxygen environment, after the printing is completed, the printed objects can be placed into the first curing container 200 that comes with the printer (before doing so, the second curing container 100 can be taken out from the first curing container 200). For other printed objects that require secondary curing in a non-oxygen environment, after the printing is completed, the printed objects can be placed into the second curing container 100.

In some other examples, even if some printed objects do not require secondary curing in a non-oxygen environment, the printed objects can still be placed into the second curing container 100 for secondary curing. Obviously, in this case, there is no need to introduce any nitrogen, carbon dioxide, or inert gas into the second curing container 100 for gas replacement.

In some embodiments of this application, the printer 300 further includes a processor, the processor is communicatively coupled with a sensor (not shown in the figure) of the door 260, the curing light source 240, and the heating assembly, and the processor is configured to:
acquire, by the sensor, open and closed state information of the door 260; in response to determining that the door 260 enters a closed state from an open state, control the curing light source 240 and the heating assembly such as the heating element 220 and the fan 230 to be turned on; and in response to determining that the door 260 enters the open state from the closed state, control the curing light source 240 and the heating assembly such as the heating element 220 and the fan 230 to be turned off.

The sensor detects the open and closed state of the door 260. When the door 260 enters the closed state from the open state, indicating that the printed object has entered the curing space, for example, entered the first curing container 200 or the second curing container 100, the controller controls the curing light source 240 and the heating assembly such as the heating element 220 and the fan 230 to be opened, thereby curing the printed object. When the door 260 enters the open state from the closed state, indicating that the printed object has been taken out from the curing space, the controller controls the curing light source 240 and the heating assembly such as the heating element 220 and the fan 230 to be closed, so as to dissipate heat from the first curing container 200 and/or the second curing container 100.

In some embodiments, the sensor may be one or more magnetic sensors, one or more photoelectric sensors, one or more ultrasonic sensors, or one or more piezoelectric sensors.

In some embodiments of this application, a temperature sensor is disposed in the first curing container 200, and the temperature sensor is electrically connected with the controller. The temperature sensor detects a temperature inside the first curing container 200, and transmits the temperature data to the controller. If the temperature exceeds a specified threshold range, the controller adjusts power of the heating assembly such as the heating element 220 and the fan 230, to control an internal temperature of the first curing container 200, thereby controlling an internal temperature of the second curing container 100 in the first curing container 200.

In some embodiments of this application, the sensor for detecting the open state of the door 260 may be an open detection switch. In other embodiments of this application, other elements may also be used, such as a photoelectric sensor, which is not limited in this application.

In some embodiments of this application, the printer 300 further includes a processor, the processor is communicatively coupled with a sensor (not shown in the figure) of the door 260, the curing light source 240, and the heating assembly, and the processor is configured to:
in response to receiving a heating-on instruction, control the curing light source 240 and the heating assembly to be turned on; and
in response to receiving a heating-off instruction, control the curing light source 240 and the heating assembly to be turned off.

It can be understood that the heating assembly may include, for example, the combination of the heating element 220 and the fan 230 described herein, or may include only the heating element 220 but not the fan 230, for example, only the heating element 220 is turned on or only the heating element 220 is turned off.

In some examples, the heating-on instruction and/or the heating-off instruction may be generated by touching a touch panel or a physical button of a printer, or may be generated by detecting other inputs such as voice or gesture, or may be transmitted from an electronic device communicatively coupled with the printer, such as a mobile phone, a computer, or a wearable device, which is not limited in the embodiments of this application.

Referring to the description of the foregoing embodiments herein, an embodiment of this application may further provide a second curing container 100, where the second curing container 100 includes a cavity configured to receive a printed object, and the second curing container 100 includes a gas inlet 111 and a gas outlet 121 that are in communication with the cavity; and
at least a portion of the second curing container 100 is configured to be light-transmissive.

It may be understood that the above second curing container 100 may be used in conjunction with the curing system and the printer described herein, or may be used in conjunction with other suitable systems or devices.

In some embodiments of this application, the second curing container 100 includes a box body 110 having a second opening and a cover 120 movably connected with the box body 110 and configured to open and close the second opening, the printed object is placed into and taken out from the cavity through the second opening, and a sealing member 150 is provided between the box body 110 and the cover 120.

In some embodiments of this application, one side of the cover is hinged with the box body 110, and another side of the cover is in snap-fit connection with the box body 110.

In some embodiments of this application, the gas inlet 111 is disposed on a face of the box body 110 different from a face where the second opening is located, and the gas outlet 121 is disposed on a face of the cover; or the gas inlet 111 is disposed on a face of the cover 120, and the gas outlet 121 is disposed on a face of the box body 110 different from a face where the second opening is located; or each of the gas inlet 111 and the gas outlet 121 is disposed on a face of the box body 110 different from a face where the second opening is located; or each of the gas inlet 111 and the gas outlet 121 is disposed on a face of the cover 120, where the gas inlet 111 is provided therein with a one-way gas inlet valve, and/or the gas outlet 121 is provided therein with a one-way gas outlet valve.

In some embodiments of this application, a number of the gas inlet 111 is one or more, and a number of the gas outlet 121 is one or more.

In some embodiments of this application, the second curing container 100 is entirely configured to be light-transmissive. In some embodiments, the second curing container may be made of a light-transmissive material, such as light-transmissive plastic, which is not limited in this application.

In some embodiments, the cavity is further configured to accommodate at least one of nitrogen, carbon dioxide, or inert gas, and after the printed object is placed in the cavity, the at least one of nitrogen, carbon dioxide, or inert gas is introduced into the cavity through the gas inlet 111, and discharged from the gas outlet 121 after the printed object is cured.

In some embodiments of this application, the printed object has a fourth opening, and the second curing container 100 further includes:
a support platform, configured to be adapted to the cavity and having a plurality of holes on a surface of the support platform; and
one or more support columns, where one end of the one or more support columns is configured to be adapted to the plurality of holes, and the printed object is placed at another end of the one or more support columns through the fourth opening.

Referring to the descriptions of the foregoing embodiments herein, an embodiment of this application may further provide a curing method, applied to the curing system provided in the embodiments of this application, and including:
placing a printed object into a second curing container 100;
introducing the second curing container 100 with at least one of nitrogen, carbon dioxide or inert gas; and
placing the second curing container 100 into the first curing container.

It can be understood that after the cover 120 of the second curing container 100 is opened and the printed object is placed in the second curing container 100, the cover 120 needs to be closed, and at least one of nitrogen or carbon dioxide or inert gas is introduced into the second curing container 100 through the gas inlet 111. The original air in the second curing container 100 will be discharged from the gas outlet 121 under pressure, and the gas replacement will be completed after a period of introducing and exhausting. Then, the second curing container 100 with the printed object after the gas replacement is completed is placed into the first curing container, the door of the first curing container is closed, and curing is started.

The embodiments or implementations in this specification are described in a progressive manner, each embodiment focuses on the differences from other embodiments, and the same or similar parts between the embodiments can be referred to each other.

It is noted that references in the specification to "one embodiment," "an embodiment," "an example embodiment," "some embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of those skilled in the art to realize such feature, structure, or characteristic in connection with other embodiments whether or not explicitly described.

Finally, it should be noted that, after considering the specification and practicing the application disclosed herein, those skilled in the art will easily think of other embodiments of the application. This application is intended to cover any variations, uses, or adaptive changes of this application that follow the general principles of this application and include common knowledge or conventional technical means in the art that are not disclosed in this application, and are not limited to the precise structures that have been described above and shown in the accompanying drawings, and various modifications and changes can be made without departing from the scope thereof. The scope of this application is limited only by the appended claims.

## Claims

1. A curing system, comprising:
a first curing container (200), comprising:
a housing (210) having a first opening (211), and
a door (260) configured to open and close the first opening,
wherein the first curing container is provided therein with a curing light source (240) and a heating element (220);
a second curing container (100), capable of being placed into and taken out from the first curing container through the first opening, wherein the second curing container comprises:
a cavity (131), configured to receive a printed object (400), and
a gas inlet (111) and a gas outlet (121) that are in communication with the cavity; and
wherein at least a portion of the second curing container facing the curing light source is configured to be light-transmissive.

2. The curing system according to claim 1, wherein the second curing container comprises:
a box body (110) having a second opening (212), and
a cover (120), movably connected with the box body and configured to open and close the second opening,
wherein the printed object is placed into and taken out from the cavity through the second opening, and a sealing member (150) is provided between the box body and the cover.

3. The curing system according to claim 2, wherein one side of the cover is hinged with the box body, and another side of the cover is in snap-fit connection with the box body.

4. The curing system according to claim 2, wherein,
the gas inlet is disposed on a face of the box body different from a face where the second opening is located, and the gas outlet is disposed on a face of the cover; or
the gas inlet is disposed on a face of the cover, and the gas outlet is disposed on a face of the box body different from a face where the second opening is located; or
each of the gas inlet and the gas outlet is disposed on a face of the box body different from a face where the second opening is located; or
each of the gas inlet and the gas outlet is disposed on a face of the cover;
wherein the gas inlet is provided therein with a one-way gas inlet valve (130), and/or the gas outlet is provided therein with a one-way gas outlet valve (140);
wherein a number of the gas inlet is one or more, and a number of the gas outlet is one or more.

5. The curing system according to any one of claims 1 to 4, wherein the first opening is disposed on a first side portion of the housing, a second side portion of the housing has a third opening (213),
the curing light source is at a bottom and/or a top of the housing, and the heating element is disposed facing the third opening.

6. The curing system according to claim 5, wherein,
the first side portion and the second side portion are two opposite side portions of the housing, or the first side portion and the second side portion are two adjacent side portions of the housing; and/or
the curing light source comprises a plurality of ultraviolet lamps, the plurality of ultraviolet lamps are evenly spaced at the bottom and/or the top of the housing, and
the housing comprises a light-transmissive plate (250) positioned relative to the curing light source, the heating element is between an air outlet of a fan (230) and the third opening, and the air outlet of the fan is disposed facing the third opening.

7. The curing system according to any one of claims 1 to 6, wherein,
the second curing container is entirely configured to be light-transmissive; and/or
the cavity is further configured to accommodate at least one of nitrogen, carbon dioxide, or inert gas, and
the at least one of nitrogen, carbon dioxide, or inert gas is introduced into the cavity through the gas inlet after the printed object is placed in the cavity, and is discharged from the gas outlet after the printed object is cured.

8. The curing system according to any one of claims 1 to 7, wherein,
one side of the door is hinged with the housing, and another side of the door is in snap-fit connection or magnetic connection with the housing;
or, the housing is configured as a drawer, the door is configured as a front panel of the drawer, and at least a portion of the drawer facing the curing light source is configured to be light-transmissive; and/or
the printed object has a fourth opening (420), and the curing system further comprises:
a support platform (500), configured to be adapted to the cavity and having a plurality of holes (510) on a surface of the support platform; and
one or more support columns (600), wherein one end of the one or more support columns is configured to be adapted to the plurality of holes, and the printed object is placed at another end of the one or more support columns through the fourth opening.

9. A printer (300), comprising a printer body (310) and the curing system according to any one of claims 1 to 8, wherein the curing system is inside the printer body.

10. The printer according to claim 9, comprising a processor communicatively coupled with a sensor of the door, the curing light source and the heating element, respectively, wherein the processor is configured to:
acquire, by the sensor, open and closed state information of the door;
in response to determining that the door enters a closed state from an open state, control the curing light source and the heating element to be turned on; and
in response to determining that the door enters the open state from the closed state, control the curing light source and the heating element to be turned off.

11. The printer according to claim 9, comprising a processor communicatively coupled with the curing light source and the heating element, respectively, wherein the processor is configured to:
in response to receiving a heating-on instruction, control the curing light source and the heating element to be turned on; and
in response to receiving a heating-off instruction, control the curing light source and the heating element to be turned off.

12. A second curing container (100), comprising:
a cavity (131), configured to receive a printed object (400), and
a gas inlet (111) and a gas outlet (121) that are in communication with the cavity; and
wherein at least a portion of the second curing container is configured to be light-transmissive.

13. The second curing container according to claim 12, wherein the second curing container comprises:
a box body (110) having a second opening (212), and
a cover (120), movably connected with the box body and configured to open and close the second opening,
wherein the printed object is placed into and taken out from the cavity through the second opening, and a sealing member (150) is provided between the box body and the cover.

14. The second curing container according to claim 13, wherein,
the gas inlet is disposed on a face of the box body different from a face where the second opening is located, and the gas outlet is disposed on a face of the cover; or
the gas inlet is disposed on a face of the cover, and the gas outlet is disposed on a face of the box body different from a face where the second opening is located; or
each of the gas inlet and the gas outlet is disposed on a face of the box body different from a face where the second opening is located; or
each of the gas inlet and the gas outlet is disposed on a face of the cover;
wherein the gas inlet is provided therein with a one-way gas inlet valve (130), and/or the gas outlet is provided therein with a one-way gas outlet valve (140); and/or
the cavity is further configured to accommodate at least one of nitrogen, carbon dioxide, or inert gas, and
the at least one of nitrogen, carbon dioxide, or inert gas is introduced into the cavity through the gas inlet after the printed object is placed in the cavity, and is discharged from the gas outlet after the printed object is cured.

15. A printer (300), comprising:
a printer body (310), and
a first curing container (200), disposed at a bottom of the printer body and comprising:
a housing (210), having a first opening (211), and
a door (260), configured to open and close the first opening,
wherein the first curing container is provided therein with a curing light source (240) and a heating element (220).
